# DEMANDE DE BREVET EUROPEEN

(11) **EP 4 585 570 A1**
(43) Date de publication de la demande: **16.07.2025**
(21) Numéro de dépôt: 25151016.0
(22) Date de dépôt: 09.01.2025
(51) Int. Cl.: C02F 1/44, C02F 1/463, C02F 3/02, C02F 3/12, C02F 3/30, C02F 9/00, C02F 3/00, C02F 103/00

(54) **DISPOSITIF ET PROCÉDÉ DE TRAITEMENT DES EAUX USÉES**

(30) Priorité: 10.01.2024 BE 202405010
(71) Demandeur: Eloy Water SA, 4140 Sprimont (BE)
(72) Inventeur: SALSEDO, Marco, 4140 Sprimont (BE); PARTHOENS, Antoine, 4140 Sprimont (BE); LEGRAND, Matthieu, 4140 Sprimont (BE); FORTHOMME, Loic, 4140 Sprimont (BE); BODEUX, Sarah, 4140 Sprimont (BE)
(74) Mandataire: Calysta NV

(57) **Abrégé**

Dispositif pour traiter des eaux usées comprenant une entrée d'eaux usées, et une sortie d'eau propre entre lesquelles se trouve une enceinte de réception comprenant un premier compartiment agencé pour réaliser un traitement biologique aérobie des eaux usées, et un deuxième compartiment agencé pour recevoir les eaux du premier compartiment et comprenant une membrane de filtration. L'enceinte comprenant des moyens d'aération, de circulation des eaux, et de contrôle. Le dispositif présente au moins un mode opérationnel dans lequel le premier compartiment présente une hauteur d'eau H1 variable et dans lequel le deuxième compartiment présente une hauteur d'eau H2 substantiellement constante.

## Description

### Domaine technique

La présente invention se rapporte à un dispositif pour traiter des eaux usées.

La présente invention se rapporte également à un procédé pour traiter des eaux usées.

Le présente invention se rapporte enfin à un procédé pour traiter des eaux usées en utilisant le dispositif selon la présente invention.

### Arrière-plan technologique de l'invention

L'eau est une ressource naturelle indispensable. Le traitement des eaux usées, notamment des eaux usées domestiques, avant leur rejet dans la nature existe depuis longtemps. Cependant, sachant l'augmentation de la démographie mondiale et une augmentation des zones géographiques où un accès aisé à l'eau est de plus en plus difficile en raison notamment de changements climatiques, des dispositifs et des procédés de traitement des eaux usées permettant une valorisation et/ou des usages nouveaux des eaux usées ont vu le jour depuis plusieurs années.

Dans ce contexte, il existe différents procédés de traitement des eaux usées :
- des procédés physiques basées sur des processus de décantation et/ou de filtration permettant d'éliminer les macrodéchets et de réduire la quantité de matières solides en suspension et/ou de réduire la quantité de virus et/ou microorganismes potentiellement nocifs pouvant être présents dans les eaux usées, et/ou
- des procédés chimiques, électrochimiques permettant de coaguler des polluants et/ou de réduire la matière organique présentes dans les eaux usées, et/ou
- des procédés biologiques permettant, grâce à l'activité microbiologique, de réduire la quantité de matières organiques et de matières en suspension présentes dans les eaux usées.

Bien que des dispositifs de traitement des eaux usées existent, ceux-ci sont souvent encombrants et nécessitent de grands volumes de traitement et/ou des entretiens réguliers.

Il existe donc toujours un besoin de disposer de dispositifs pour traiter des eaux usées, en particulier des eaux domestiques (eaux grises et/ou eaux noires) provenant par exemple d'une habitation unifamiliale, d'un complexe hôtelier, d'une entreprise, ou d'un lotissement, qui soit à la fois simple permettant une industrialisation facile, bon marché, facile d'utilisation et compact. Ceci pour assurer un emplacement aisé du dispositif en fonction de la place disponible, tout en assurant un traitement de l'eau de type intensif, c'est-à-dire notamment un traitement biologique à concentration élevée en boue. Ceci permet le traitement d'une quantité importante d'eaux usées pour un volume de dispositif donné. De plus, de manière à pouvoir être applicable à des eaux domestiques, il existe également un besoin de disposer d'un dispositif permettant le traitement d'eaux usées dont les effluents peuvent être fortement variables au cours du temps, par exemple pendant des périodes de vacances ou de congés scolaires.

### Etat de la technique

Des dispositifs et procédés de traitement des eaux usées sont connus. En particulier, il existe des dispositifs pour traiter des eaux usées combinant un réacteur biologique et/ou un réacteur à membrane avec une cellule électrochimique permettant par exemple une étape d'électrocoagulation. Dans ce contexte, le document US202318164829 décrit un procédé et un système pour traiter des eaux usées comprenant une étape de prétraitement des eaux usées suivie d'un traitement électrochimique des eaux et d'un réacteur à membrane pour donner des eaux traitées. Malheureusement, ce dispositif est relativement complexe comprenant une succession de réacteurs en série rendant difficile son industrialisation à grande échelle.

Le document US2010051542 décrit un système et un procédé de traitement des eaux usées. Ce système comprend une chambre de traitement biologique dans laquelle se trouve des électrodes pour réaliser une étape d'électrocoagulation et une membrane pour réaliser une filtration des eaux ayant été traitées par électrocoagulation. Malheureusement, le système selon ce document est encombrant car il nécessite l'utilisation d'un réacteur tampon en amont de manière à assurer que le niveau d'eaux usées dans le système de traitement en aval soit toujours constant. Le système de traitement selon ce document comprend un réacteur cylindrique comprenant deux électrodes cylindriques. Chaque électrode ayant une pluralité de trous pour laisser passer les eaux en traitement de la périphérie vers le centre du dispositif. La première électrode cylindrique périphérique définit une première zone en périphérie du réacteur et entoure la deuxième électrode cylindrique située dans la partie centrale du réacteur. La deuxième électrode cylindrique entoure une zone centrale dans laquelle se trouve un réacteur membranaire. En pratique, ce système aura une capacité de filtration limitée et définie par le volume central de la zone centrale. D'autre part, selon ce document, en raison de la grande surface des électrodes nécessaires au dispositif, ce système est difficilement industrialisable surtout pour des grands volumes de réacteur. Enfin, ce système n'est pas très robuste car il ne pourra pas traiter des eaux usées de manière intensive en générant une concentration en boues élevée, sans colmater rapidement la membrane de filtration et/ou en rendant son utilisation difficile sur le long terme et/ou relativement peu économique en raison de la nécessité de prévoir des entretiens réguliers.

Le document CN108609810 décrit un procédé de traitement des eaux usées contenant du nickel chimique. Le procédé selon ce document comprend une étape d'ajustement du pH des eaux usées afin de les rendre acides, une étape de floculation électrique, une autre étape d'ajustement de pH afin de rendre les eaux alcalines, et une étape de filtration membranaire.

Le document CN106698865 concerne le domaine de la technologie d'épuration des eaux usées, en particulier un épurateur d'eaux usées industriel. Ce document décrit un système comprenant un réservoir de stockage de sédiments, un réservoir électrolytique, un réservoir bioréacteur à membrane, et un réservoir de stockage d'eau.

Le document CN116425299 concerne le domaine technique du traitement des eaux usées, en particulier un bioréacteur à membrane électrochimique pour le traitement des eaux usées et un procédé de traitement des eaux usées. Ce document décrit un bioréacteur à membrane électrochimique pour le traitement des eaux usées comprenant une chambre anodique, une chambre aérobie, la chambre anodique et la chambre aérobie étant isolées l'une de l'autre.

Bien que ces documents vantent les méritent de leur technologie, en pratique, les systèmes de traitement des eaux selon ces documents ne sont pas flexibles et ne permettent pas de s'adapter par exemple à des volumes variables d'effluents d'entrée des eaux usées.

Il existe donc toujours un besoin de disposer d'un dispositif de traitement des eaux usées qui soit à la fois simple et compact, et ce quel que soit les capacités de traitement des eaux usées du dispositif, adaptatif à la variabilité des effluents entrant dans le système, robuste pour ne nécessiter que peu d'entretien et également adapté à un fonctionnement avec des hautes concentrations en boue, l'ensemble devant permettre à le rendre facilement industrialisable.

### Objectifs de l'invention

La présente invention a pour but de pallier les inconvénients de l'état de la technique, notamment ceux décrits ci-dessus.

En particulier, la présente invention se propose de fournir un dispositif de traitement des eaux usées qui soit simple et compact, quel que soient les capacités de traitement des eaux usées du dispositif.

Un autre objectif de l'invention est de fournir un dispositif qui soit robuste nécessitant peu d'entretien, permettant une utilisation aisée, mais également industrialisable facilement pour rester bon marché.

Enfin, un objectif de l'invention est de fournir un dispositif qui permet de traiter des eaux usées avec un processus fonctionnant avec une concentration élevée de boues, tout en étant adaptatif à la variabilité de la quantité et qualité des eaux usées qui entrent dans le dispositif.

### Résumé de l'invention

Pour atteindre les objectifs précités, il est prévu selon l'invention un dispositif pour traiter des eaux usées comprenant une entrée d'eaux usées, et une sortie d'eau propre entre lesquelles se trouve une enceinte de réception des eaux usées comprenant un premier et un deuxième compartiment, situé de part et d'autre d'une paroi de communication, agencée pour former un circuit fluidique de circulation des eaux comprenant :
- ledit premier compartiment, lequel est agencé pour être relié à une unité de pré-traitement via une communication fluidique passant par l'entrée d'eaux usées et étant agencé pour réaliser un traitement biologique aérobie des eaux usées et muni d'un moyen de mesure de niveau de préférence agencé pour envoyer un signal de niveau d'eau à un moyen de contrôle de la circulation des eaux et d'une pluralité d'électrodes,
- ledit deuxième compartiment, lequel est agencé pour recevoir les eaux du premier compartiment et comprenant une membrane de filtration séparant le deuxième compartiment en une première zone et en une deuxième zone, la deuxième zone étant séparée de la première zone par la membrane de filtration et reliée à la sortie d'eau propre, ladite première zone étant connectée de manière fluidique à une sortie apte à évacuer des boues,
l'enceinte comprenant en outre
- un moyen d'aération en connexion fluidique avec le premier et le deuxième compartiment, commandé par un moyen de contrôle de l'aération,
- un moyen de circulation des eaux en connexion opérationnelle avec le premier et le deuxième compartiment, commandé par un moyen de contrôle de la circulation d'eau,
- un moyen de contrôle de la pluralité d'électrodes,
   caractérisé en ce que le dispositif présente
- au moins un mode opérationnel dans lequel (a) le premier compartiment présente une hauteur d'eau H1 variable maintenue égale ou supérieure à un seuil minimum Hmin par le moyen de contrôle de la circulation d'eau, dans laquelle la pluralité d'électrodes est immergée, et (b) le deuxième compartiment présente une hauteur d'eau H2 substantiellement constante, dans laquelle la membrane de filtration est immergée, la hauteur d'eau H2 étant maintenue par le moyen de contrôle de la circulation d'eau, et
- au moins un mode d'arrêt.

En effet, le dispositif est simple et compact, car il comprend dans une seule enceinte deux compartiments : un premier compartiment agencé pour réaliser un traitement biologique aérobie directement couplé à une pluralité d'électrodes agencées pour réaliser une électrocoagulation, ce premier compartiment se trouvant en amont dans le circuit fluidique de circulation des eaux, et un deuxième compartiment, se trouvant en aval dans le circuit fluidique de circulation des eaux, agencé pour réaliser une filtration des eaux provenant du premier compartiment. Le dispositif permet d'atteindre une concentration élevée en boue tout en assurant le traitement des eaux usées. En effet, ce dispositif permet d'optimiser le processus de traitement des eaux usées en séparant la dégradation biologique et la réaction d'électrocoagulation qui se favorisent mutuellement dans le premier compartiment (réacteur biologique) en amont, et la filtration en aval dans le deuxième compartiment (réacteur membranaire). Le traitement biologique combiné à l'électrocoagulation permet d'augmenter la concentration des boues dans l'eau du dispositif selon l'invention. Le traitement biologique est assuré par les micro-organismes qui grandissent et se multiplient en dégradant la matière organique, ce qui forme une partie de la boue, la boue biologique. L'électrocoagulation, quant à elle, engendre la création de "floc" de boue par le procédé électrochimique formant une autre partie de la boue, la boue chimique. L'ensemble des deux boues crée une concentration élevée en boues dans l'eau du dispositif selon l'invention, ce qui permet d'avoir un dispositif compact ayant un traitement intensif des eaux usées. Le moyen d'aération du dispositif selon l'invention permet de garder en vie les micro-organismes, de maintenir en suspension les particules de boue (et donc maximiser la superficie de contact entre l'eau sale et les "agents traitants" (micro-organismes et électrocoagulation), d'auto-nettoyer les électrodes et la membrane de filtration (décolmatage), et également, contribue à faire circuler l'eau d'un compartiment à l'autre.

De plus, le dispositif est muni d'un moyen de contrôle de l'aération, un moyen de contrôle de la circulation des eaux et d'un moyen de contrôle de la pluralité d'électrodes permettant un fonctionnement ou un arrêt à la fois du moyen de circulation des eaux, mais également de la pluralité d'électrodes (électrocoagulation), de la filtration membranaire et de l'aération. Le mode opérationnel du dispositif dans lequel (a) le premier compartiment présente une hauteur d'eau H1 variable maintenue égale ou supérieure à un seuil minimum Hmin par le moyen de contrôle de la circulation d'eau, dans laquelle la pluralité d'électrodes est immergée, et (b) le deuxième compartiment présente une hauteur d'eau H2 substantiellement constante, dans laquelle la membrane de filtration est immergée, la hauteur d'eau H2 étant maintenue par le moyen de contrôle de la circulation d'eau permet au premier compartiment d'assurer, en plus de la dégradation biologique et de l'électrocoagulation, le rôle d'une zone tampon pour lisser la variabilité des débits d'eaux usées entrant dans le dispositif sans impacter la hauteur d'eau H2 substantiellement constante du deuxième compartiment assurant que la membrane de filtration et la pluralité d'électrodes soient immergées de manière constante. Cette fonction multiple du premier compartiment permet au dispositif selon l'invention d'être très compact et de traiter en continu des eaux usées, et ce même si les effluents d'entrée peuvent être fortement variables au cours du temps. Ce dispositif selon l'invention est donc par exemple adapté pour traiter des eaux usées telles que des eaux domestiques grises et/ou noires d'une habitation, par exemple d'une habitation unifamiliale et/ou d'un lotissement et/ou d'un hôtel, etc... dans lesquels les effluents d'entrée des eaux usées peuvent être fortement variables en fonction de différentes périodes de l'année. Le dispositif selon l'invention comprenant une enceinte principale est également facilement industrialisable, facilement transportable et sa dimension compacte permet par exemple soit de l'enterrer ou de le positionner dans une cave d'une habitation en fonction de l'espace disponible.

D'autres formes de réalisation du dispositif selon la présente invention sont indiquées dans les revendications annexées.

La présente invention se rapporte également à un procédé pour traiter des eaux usées en mettant en oeuvre le dispositif pour traiter des eaux usées selon la présente invention comprenant :
- une entrée des eaux usées dans un premier compartiment,
- un traitement biologique aérobie des eaux usées dans le premier compartiment,
- une électrocoagulation des eaux usées dans le premier compartiment,
- un transfert des eaux en traitement du premier compartiment au deuxième compartiment,
- une filtration membranaire des eaux en traitement dans le deuxième compartiment par passage des eaux à filtrer au travers d'une membrane de filtration, laquelle sépare le deuxième compartiment en une première zone externe à la membrane et une deuxième zone défini par la membrane, formant des eaux filtrées,
- une sortie des eaux filtrées de la deuxième zone,
caractérisé en ce que
le premier compartiment présente une hauteur d'eau H1 variable maintenue égale ou supérieure à un seuil minimum Hmin par un moyen de contrôle de la circulation d'eau, et le deuxième compartiment présente une hauteur d'eau H2 substantiellement constante, dans laquelle la membrane de filtration est immergée, ladite hauteur d'eau H2 étant maintenue par ledit moyen de contrôle de la circulation d'eau.

Les inventeurs ont remarqué de manière surprenante que la combinaison des caractéristiques techniques du procédé selon l'invention, comprenant un traitement biologique des eaux usées couplé à une étape d'électrocoagulation dans un premier compartiment (réacteur biologique) suivi par une étape de filtration dans un deuxième compartiment (réacteur membranaire) dans lequel le premier compartiment présente une hauteur d'eau H1 variable maintenue égale ou supérieure à un seuil minimum Hmin par un moyen de contrôle de la circulation d'eau, et en ce que le deuxième compartiment présente une hauteur d'eau H2 substantiellement constante, dans laquelle la membrane de filtration est immergée, la hauteur d'eau H2 étant maintenue par le moyen de contrôle de la circulation d'eau, permet de traiter en continu des eaux usées dont les effluents peuvent être fortement variables en quantité et qualité tout en pouvant fonctionner à haute concentration en boue.

D'autres formes de réalisation du procédé selon la présente invention sont indiquées dans les revendications annexées.

Enfin, la présente invention se rapporte également à un procédé pour traiter des eaux usées en mettant en oeuvre le dispositif selon la présente invention comprenant:
- une entrée des eaux usées dans le premier compartiment,
- une électrocoagulation des eaux usées pour donner des eaux en traitement,
- un transfert des eaux en traitement, par un actionnement du moyen de circulation des eaux déclenchant le transfert, du premier compartiment vers le deuxième compartiment pour donner des eaux à filtrer,
- une filtration des eaux à filtrer de la première zone vers la deuxième zone du deuxième compartiment par un deuxième actionnement du moyen de circulation des eaux, pour donner des eaux filtrées, la filtration étant réalisé lorsque le capteur de niveau d'eau détecte une hauteur d'eau H1 dans le premier compartiment égale ou supérieure à un seuil minimal de filtration Hf1 et préférentiellement égale ou supérieure à un deuxième seuil de filtration Hf2,
- une alimentation en air du premier compartiment et/ou du deuxième compartiment par le moyen d'aération,
- une sortie des eaux filtrées, par un troisième actionnement du moyen de circulation des eaux, des eaux filtrées de la deuxième zone vers un collecteur d'eau pour donner des eaux traitées.

D'autres formes de réalisation du procédé selon la présente invention en mettant en oeuvre le dispositif selon la présente invention sont indiquées dans les revendications annexées.

Selon la présente invention, on entend de préférence par le terme « eaux usées » des eaux grises et/ou des eaux noires ou un mélange d'eaux grises et d'eaux noires provenant par exemple des eaux domestiques, comme les eaux usées d'une habitation unifamiliale ou plurifamiliale, d'un lotissement, d'un complexe hôtelier, etc...

### Description détaillée de l'invention

D'autres caractéristiques, détails et avantages de l'invention ressortiront de la description donnée ci-après, à titre non limitatif et en faisant référence aux figures et aux exemples.
La figure 1 est une vue en coupe d'un premier mode de réalisation du dispositif pour traiter des eaux usées selon la présente invention.
La figure 2 est une vue en coupe d'un deuxième mode de réalisation du dispositif pour traiter des eaux usées selon la présente invention.
La figure 3 est une vue en coupe d'un troisième mode de réalisation du dispositif pour traiter des eaux usées selon la présente invention.
La figure 4 est une vue en coupe d'un quatrième mode de réalisation du dispositif pour traiter des eaux usées selon la présente invention.
La figure 5 est une vue en coupe d'un cinquième mode de réalisation du dispositif pour traiter des eaux usées selon la présente invention.
La figure 6 est une vue en coupe d'un sixième mode de réalisation du dispositif pour traiter des eaux usées selon la présente invention.
La figure 7 est une vue en coupe d'un septième mode de réalisation du dispositif pour traiter des eaux usées selon la présente invention.
La figure 8 est une vue en coupe d'un huitième mode de réalisation du dispositif pour traiter des eaux usées selon la présente invention.

Sur les figures, les éléments identiques ou analogues portent les mêmes références.

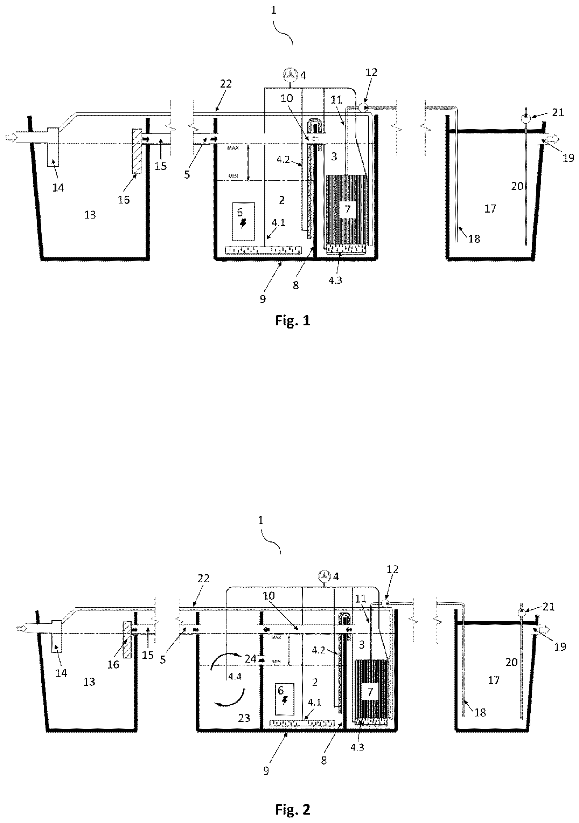

Dans le contexte de la présente invention, les termes «amont » et «aval » font référence à l'écoulement de l'eau dans le dispositif et doivent être compris dans leur sens commun, à savoir dans le sens de déplacement moyen de l'eau, depuis l'entrée vers la sortie, lors du fonctionnement du dispositif selon l'invention, c'est-à-dire selon la direction allant de la gauche vers la droite sur les figures 1 à 8.

La figure 1 montre un schéma d'un mode de réalisation du dispositif 1 pour traiter des eaux usées comprenant une entrée d'eaux usées 5, et une sortie d'eau propre 11 entre lesquelles se trouve une enceinte de réception 9 des eaux usées comprenant un premier compartiment 2 et un deuxième compartiment 3, situé de part et d'autre d'une paroi de communication 8, agencée pour former un circuit fluidique de circulation des eaux comprenant :
- le premier compartiment 2, lequel est agencé pour être relié à une unité de pré-traitement via une communication fluidique passant par l'entrée d'eaux usées 5 et étant agencé pour réaliser un traitement biologique aérobie des eaux usées et muni d'un moyen de mesure agencé pour envoyer un signal de niveau d'eau à un moyen de contrôle de la circulation des eaux de niveau et d'une pluralité d'électrodes 6,
- le deuxième compartiment 3, lequel est agencé pour recevoir les eaux du premier compartiment 2 et comprenant une membrane de filtration 7 séparant le deuxième compartiment 3 en une première zone et en une deuxième zone, la deuxième zone étant séparée de la première zone par la membrane de filtration 7 et reliée à la sortie d'eau propre 11, la première zone étant connectée de manière fluidique à une sortie 22 apte à évacuer des boues,
l'enceinte 9 comprenant en outre
- un moyen d'aération 4 en connexion fluidique avec le premier 2 et le deuxième compartiment 3, commandé par un moyen de contrôle de l'aération,
- un moyen de circulation des eaux en connexion opérationnelle avec le premier 2 et le deuxième compartiment 3, commandé par un moyen de contrôle de la circulation d'eau,
- un moyen de contrôle de la pluralité d'électrodes 6, caractérisé en ce que
le dispositif présente
- au moins un mode opérationnel dans lequel (a) le premier compartiment 2 présente une hauteur d'eau H1 variable maintenue égale ou supérieure à un seuil minimum Hmin par le moyen de contrôle de la circulation d'eau, dans laquelle la pluralité d'électrodes 6 est immergée, et (b) le deuxième compartiment 3 présente une hauteur d'eau H2 substantiellement constante, dans laquelle la membrane de filtration 7 est immergée, la hauteur d'eau H2 étant maintenue par le moyen de contrôle de la circulation d'eau, et
- au moins un mode d'arrêt.

De préférence, le mode opérationnel étant déclenché par le moyen de contrôle de la circulation des eaux lorsque la hauteur d'eau H1, mesurée par le moyen de mesure de niveau, est supérieure au seuil minimum Hmin.

De préférence, ledit moyen de contrôle de la circulation des eaux est en connexion opérationnelle avec ledit moyen de mesure de niveau, de préférence le moyen de circulation des eaux comprend une pompe agencée pour pomper et évacuer les eaux filtrées par ladite sortie d'eau propre.

De préférence, ledit au moins un mode opérationnel est déclenché par ledit moyen de contrôle de la circulation des eaux, lequel actionne ledit moyen de circulation des eaux (de préférence ladite pompe) lorsque ladite hauteur d'eau H1 (lorsque ledit signal de niveau d'eau), mesurée par ledit moyen de mesure de niveau, est supérieure audit seuil minimum Hmin. De préférence, ledit moyen de contrôle de la circulation des eaux actionne la pompe, de manière à évacuer les eaux filtrées par ladite sortie d'eau propre, lorsque ladite hauteur d'eau H1, mesurée par ledit moyen de mesure de niveau, est supérieure audit seuil minimum Hmin.

De préférence, l'entrée d'eaux usées 5 comprend une entrée gravitaire des eaux usées dans l'enceinte de réception 9.

De préférence, un système de régulation rassemble le moyen de contrôle de l'aération, le moyen de contrôle de la circulation d'eau, et le moyen de contrôle de la pluralité d'électrodes. De préférence, le système de régulation est un moyen de contrôle électronique. De préférence, le moyen de contrôle électronique est un moyen de contrôle électronique sur circuit imprimé, de manière plus préférée une carte électronique ou un automate programmable industriel.

De préférence, dans le dispositif pour traiter des eaux usées selon l'invention, le moyen de mesure de niveau est en connexion opérationnelle avec le moyen de contrôle de la circulation des eaux de manière à ce que le moyen de mesure de niveau mesure la hauteur d'eau H1 et envoie un signal de niveau H1 représentant la hauteur d'eau H1 au moyen de contrôle de la circulation des eaux, le moyen de contrôle de la circulation des eaux compare ledit signal de niveau H1 au seuil minimum Hmin et enclenche le moyen de circulation des eaux, de préférence une pompe en connexion fluidique avec la sortie d'eau propre 11 de manière à évacuer les eaux propres de la deuxième zone du deuxième compartiment 3, si la hauteur d'eau H1 est supérieure au seuil minimum Hmin. De préférence, le moyen de contrôle de la circulation des eaux n'enclenche pas le moyen de circulation des eaux si la hauteur d'eau H1 est inférieure ou égale au seuil minimum Hmin.

De préférence, le dispositif comprend en outre un canal de sortie 10 des eaux usées en connexion fluidique avec la première zone du deuxième compartiment et/ou avec le premier compartiment 2, le canal de sortie 10 des eaux usées étant agencé pour faire ramener le trop-plein de boues du compartiment 3 vers le compartiment 2.

De préférence, le moyen de circulation des eaux comprend en outre un canal de sortie 10 des eaux usées en connexion fluidique, de préférence en connexion fluidique directe, avec ladite première zone dudit deuxième compartiment 3, ledit premier compartiment 2 et, un troisième compartiment 23 si il est présent, ledit canal de sortie 10 des eaux usées étant agencé pour évacuer un trop plein d'eaux usées et/ou pour évacuer un trop plein de boues des eaux usées.

Alternativement, ou de préférence, le moyen de circulation des eaux comprend :
- au moins une pompe, la pompe étant préférentiellement en connexion fluidique directe avec la sortie d'eau propre 11 de manière à évacuer les eaux propres de la deuxième zone du deuxième compartiment 3, et/ou
- au moins un déversement gravitaire, le déversement gravitaire étant de préférence en connexion fluidique directe avec l'entrée d'eaux usées 5 de manière à permettre un écoulement des eaux usées dans l'entrée des eaux usées 5, et/ou
- un système de trop-plein connecté de manière fluidique au canal de sortie 10 des eaux usées de manière à connecter de manière fluidique le deuxième compartiment 3, de préférence la première zone du deuxième compartiment 3, et le premier compartiment 2, et/ou de manière à connecter de manière fluidique le deuxième compartiment 3, de préférence la première zone du deuxième compartiment 3, et le troisième compartiment 23.

De préférence, le premier compartiment 2 et le deuxième compartiment 3 font partie d'une enceinte 9 monobloc. En effet, ceci permet d'avoir un dispositif compact pouvant être placé dans un espace limité.

De préférence, le dispositif pour traiter des eaux usées selon la présente invention pour traiter des eaux usées d'une habitation unifamiliale comprenant le premier et le deuxième compartiment présente une surface au sol comprise entre 0,5 m² et 2 m² et une hauteur comprise entre 1 m et 3 m, de préférence entre 1 m et 2 m. De préférence, le dispositif pour traiter des eaux usées selon la présente invention pour traiter des eaux usées d'un collectivité présente une surface au sol comprise entre 1 m² et 5 m², de préférence entre 2 m² et 4 m². Ceci permettant d'avoir un dispositif compact générant un encombrement limité au sol.

La figure 2 illustre un deuxième mode de réalisation du dispositif selon l'invention dans lequel l'enceinte 9 comprend en outre un troisième compartiment 23 agencé pour réaliser un traitement biologique anaérobie, le troisième compartiment 23 étant en connexion fluidique (10, 24) avec le premier compartiment 2, avec l'entrée d'eaux usées 5, et avec le canal de sortie 10 des eaux usées et étant préférentiellement localisé dans l'enceinte 9 en amont par rapport au premier compartiment 2 dans le circuit fluidique de circulation des eaux.

De préférence, le canal de sortie 10 des eaux usées est en connexion fluidique avec la première zone du deuxième compartiment, le premier compartiment 2 et, le troisième compartiment 23 si il est présent, le canal de sortie 10 des eaux usées étant agencé pour faire ramener le trop-plein de boues du compartiment 3 vers le compartiment 2 et/ou le troisième compartiment 23.

De préférence, dans le premier et le deuxième mode de réalisation du dispositif selon la présente invention, l'entrée des eaux usées 5 dans l'enceinte 9 de réception se réalise au niveau du troisième compartiment 23 ou du premier compartiment 2.

De préférence, l'entrée 5 des eaux usées est connectée de manière fluidique à une sortie des eaux pré-traitées 15 d'une unité de pré-traitement 13 préexistante, et/ou la sortie d'eau propre 11 du deuxième compartiment 3 est connectée de manière fluidique à une entrée d'eau propre 18 d'une unité de stockage d'eau propre 17 préexistante. En effet, cela permet de connecter le dispositif selon l'invention à une unité de pré-traitement et/ou à une unité de stockage d'eau propre préexistante d'une habitation.

De préférence, la sortie 22 apte à évacuer des boues (purge de boues), par exemple des boues biologiques et/ou chimiques, de l'enceinte 9 de réception est également connectée de manière fluidique à l'unité de pré-traitement 13 préexistante.

De préférence, dans le deuxième mode de réalisation du dispositif selon la présente invention, le premier compartiment 2, le deuxième compartiment 3 et le troisième compartiment 23 font partie d'une enceinte 9 monobloc.

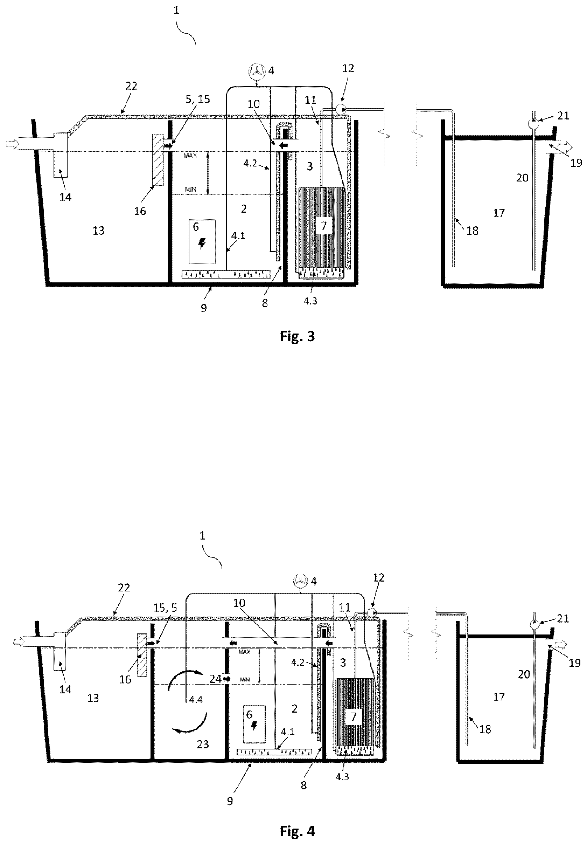

Les figures 3 et 4 illustrent respectivement un troisième et quatrième mode de réalisation du dispositif selon la présente invention dans lequel le dispositif comprend en outre une unité de pré-traitement 13 comme, par exemple, un décanteur et/ou une unité de préfiltration en amont du premier compartiment 2 (troisième mode de réalisation du dispositif selon l'invention, Figure 3) ou du troisième compartiment 23 (quatrième mode de réalisation du dispositif selon l'invention, Figure 4). L'unité de pré-traitement 13 étant agencée pour éliminer des gros déchets et/ou des grosses matières en suspension des eaux usées.

De préférence, l'unité de pré-traitement 13 comprend une entrée des eaux usées 14 et une sortie des eaux pré-traitées 15, la sortie des eaux pré-traitées 15 étant munie d'un filtre 16, et étant en connexion fluidique avec l'entrée des eaux usées 5 du troisième compartiment 23 ou du premier compartiment 2.

Avantageusement, dans les modes de réalisation 1 à 4 du dispositif selon la présente invention, la sortie d'eau propre 11 du deuxième compartiment 3 est connectée de manière fluidique à une entrée d'eau propre 18 d'une unité de stockage d'eau propre 17 préexistante. Cela permet de connecter de manière fluidique le dispositif selon l'invention à une unité de stockage d'eau propre déjà en place sans devoir remplacer cette unité de stockage d'eau propre préexistante.

De préférence, dans les modes de réalisation 1 et 3 du dispositif selon la présente invention, le premier compartiment 2, le deuxième compartiment 3, et l'unité de pré-traitement 13 font partie d'une enceinte 9 monobloc. Alternativement, dans les modes de réalisation 2 et 4 du dispositif selon la présente invention, le premier compartiment 2, le deuxième compartiment 3, le troisième compartiment 23 et l'unité de pré-traitement 13 font partie d'une enceinte 9 monobloc.

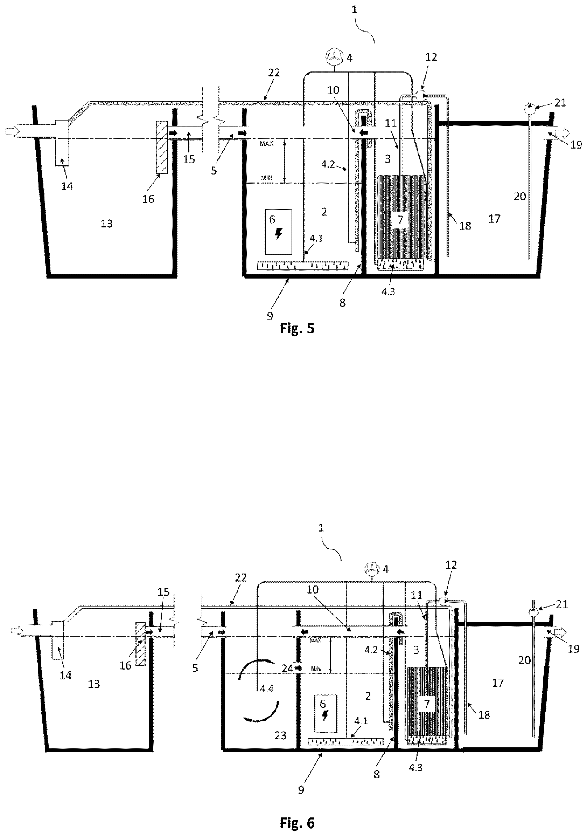

Les figures 5 à 8 illustrent respectivement un cinquième, un sixième, un septième et un huitième mode de réalisation du dispositif selon la présente invention dans lequel le dispositif 1 comprend en outre une unité de stockage d'eau propre 17 en aval du deuxième compartiment 3, l'unité de stockage d'eau propre 17 comprenant une entrée d'eau propre 18 en connexion fluidique avec la sortie d'eau propre 11 du deuxième compartiment 3.

De préférence, l'unité de stockage d'eau propre 17 comprenant en outre une sortie 20 d'eau propre connectée de manière fluidique à une pompe 21 de manière à extraire l'eau propre de l'unité de stockage d'eau propre 17. De préférence, la sortie 20 d'eau propre est connectée de manière fluidique à un système de réutilisation de l'eau propre (non représenté). De préférence, l'unité de stockage d'eau propre 17 comprend également une sortie d'eau propre 19 permettant d'évacuer un trop plein d'eau dans l'unité de stockage d'eau propre 17.

Avantageusement, dans le cinquième mode de réalisation du dispositif selon la présente invention, l'entrée 5 des eaux usées du premier compartiment 2 est connectée de manière fluidique à une sortie des eaux pré-traitées 15 d'une unité de pré-traitement 13 préexistante. Avantageusement, dans le sixième mode de réalisation du dispositif selon la présente invention, l'entrée 5 des eaux usées du troisième compartiment 23 est connectée de manière fluidique à une sortie des eaux pré-traitées 15 d'une unité de pré-traitement 13 préexistante. Cela permet de connecter de manière fluidique le dispositif selon l'invention à une unité de pré-traitement préexistante déjà en place sans devoir remplacer cette unité de pré-traitement préexistante.

De préférence, selon le cinquième mode de réalisation du dispositif selon la présente invention, le premier compartiment 2, le deuxième compartiment 3, et l'unité de stockage d'eau propre 17 font partie d'une enceinte 9 monobloc.

De préférence, selon le sixième mode de réalisation du dispositif selon la présente invention, le premier compartiment 2, le deuxième compartiment 3, le troisième compartiment 23 et l'unité de stockage d'eau propre 17 font partie d'une enceinte 9 monobloc.

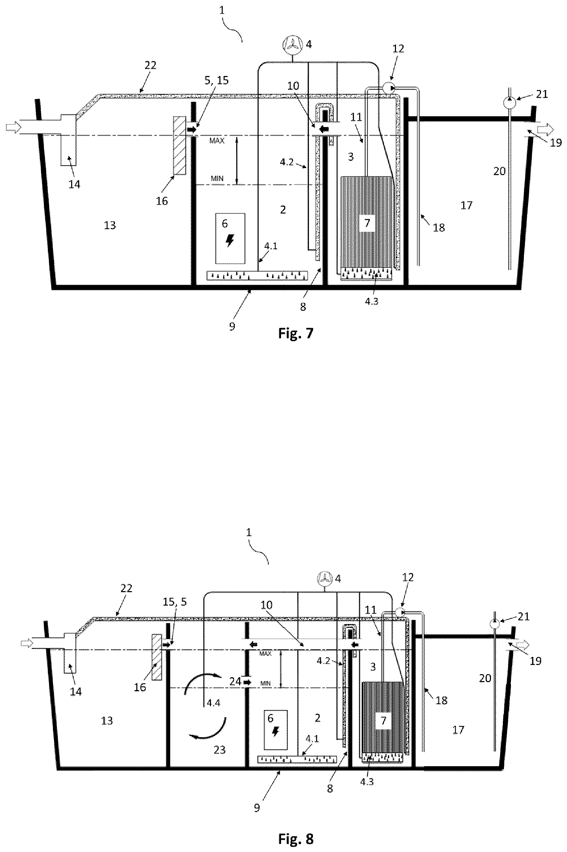

La figure 7 illustre un septième mode de réalisation du dispositif selon la présente invention comprenant, dans l'enceinte 9 de réception monobloc, l'unité de pré-traitement 13 en amont du premier compartiment 2, le premier compartiment 2, le deuxième compartiment 3, et l'unité de stockage d'eau propre 17 en aval du deuxième compartiment 3.

La figure 8 illustre un huitième mode de réalisation du dispositif selon la présente invention comprenant, dans l'enceinte 9 de réception monobloc, l'unité de pré-traitement 13 en amont du troisième compartiment 23, le troisième compartiment 23 en amont du premier compartiment 2, le premier compartiment 2 et le deuxième compartiment 3, et l'unité de stockage d'eau propre 17 en aval du deuxième compartiment 3.

De préférence, selon l'un quelconque mode de réalisation du dispositif selon la présente invention, le premier compartiment 2 comprend une première zone de mixage anaérobie en connexion fluidique avec une deuxième zone de dégradation aérobie. De préférence, la première zone de mixage anaérobie est connectée de manière fluidique à l'entrée 5 des eaux usées et la deuxième zone de dégradation aérobie est connectée de manière fluidique au deuxième compartiment 3.

De préférence, selon l'un quelconque mode de réalisation du dispositif selon la présente invention, l'enceinte 9 de réception des eaux usées est une enceinte monobloc. Ceci permet de réduire le volume total du dispositif et de pouvoir le placer plus facilement dans un espace limité.

De préférence, selon l'un quelconque mode de réalisation du dispositif selon la présente invention, les eaux usées qui entrent dans l'enceinte 9 de réception par l'entrée 5 des eaux usées sont préalablement prétraitées pour éviter que les gros déchets et/ou qu'une grande quantité de matière en suspension entre dans l'enceinte 9 de réception.

De préférence, selon l'un quelconque mode de réalisation du dispositif selon la présente invention, l'entrée 5 des eaux usées dans l'enceinte 9 de réception comprend une entrée gravitaire des eaux usées. Alternativement, ou de préférence, selon l'un quelconque mode de réalisation du dispositif selon la présente invention, le moyen de circulation des eaux présente une série de position de fonctionnement et une série de position d'arrêt passant de l'un à l'autre de manière automatique par une série d'actionnement déclenché par le moyen de contrôle de la circulation d'eau lorsqu'une quantité d'eau, mesurée par le moyen de mesure de niveau, présente dans le premier compartiment est égal ou passe au-dessus d'un seuil minimum.

De préférence, selon l'un quelconque mode de réalisation du dispositif selon la présente invention, en mode opérationnel, la membrane de filtration 7 est complètement immergée.

De préférence, selon les modes de réalisation 1, 2, 5 et 6 du dispositif selon la présente invention, la sortie 22 apte à évacuer des boues est également connectée de manière fluidique à l'unité de pré-traitement 13 préexistante. Alternativement, et de préférence, selon les modes de réalisation 3, 4, 7 et 8 du dispositif selon la présente invention, la sortie 22 apte à évacuer des boues est également connectée de manière fluidique à l'unité de pré-traitement 13 du dispositif selon la présente invention.

De préférence, selon l'un quelconque mode de réalisation du dispositif selon la présente invention, le moyen de circulation des eaux comprend (i) une pompe 12 agencée pour pomper et évacuer les eaux filtrées par la sortie d'eau propre 11, (ii) un canal de circulation 10 permettant d'évacuer un trop plein d'eaux usées du deuxième compartiment 3 vers le premier compartiment 2, ou du deuxième compartiment 3 et/ou du premier compartiment 2 vers le troisième compartiment 23, et (iii) un moyen d'aération 4 contribuant à l'aération du premier compartiment 2 et du deuxième compartiment 3 et contribuant éventuellement au mixage des eaux usées du troisième compartiment 23 et à la circulation des eaux dans le dispositif.

De préférence, selon l'un quelconque mode de réalisation du dispositif selon la présente invention, le moyen d'aération 4 comprend :
- un système de pompage par injection d'air (airlift en anglais) 4.2 du premier compartiment 2 vers le deuxième compartiment 3,
- un système d'aération 4.1 dans le premier compartiment 2,
- un système d'aération 4.3 dans le deuxième compartiment 3,
- et un système de circulation d'eau par un système de pompage par injection d'air 4.4 dans le troisième compartiment 23.

Alternativement, le système de pompage par injection d'air 4.2 et/ou 4.4 peut être remplacé par une pompe.

De préférence, le moyen d'aération 4 comprend un compresseur et un système de tuyauterie muni d'une série de vanne permettant d'alimenter en air le système de pompage par injection d'air 4.2, et/ou le système d'aération 4.1 dans le premier compartiment 2, et/ou le système d'aération 4.3 dans le deuxième compartiment 3, et/ou le système de circulation 4.4 dans le troisième compartiment 23.

De préférence, selon l'un quelconque mode de réalisation du dispositif selon la présente invention, le moyen de circulation des eaux présente une série de positions de fonctionnement et une série de positions d'arrêt passant de l'un à l'autre par une série d'actionnements. De préférence, la série de positions de fonctionnement et la série de positions d'arrêt passant de l'un à l'autre de manière automatique par une série d'actionnements déclenchés par le moyen de contrôle de la circulation d'eau lorsqu'une quantité d'eau usée, de préférence pré-traitée entre dans l'enceinte 9 de réception et est mesurée par le moyen de mesure de niveau, présente dans le premier compartiment 2 passe par une variation du niveau d'eau au-dessus du seuil minimum. En effet, une régulation automatique du moyen de circulation des eaux par le moyen de contrôle de la circulation d'eau en fonction du niveau d'eau dans le dispositif permet d'avoir un dispositif autonome ne requérant que très peu d'intervention manuelle même lorsque le débit des eaux usées en entrée est très variable.

De préférence, selon l'un quelconque mode de réalisation du dispositif selon la présente invention, la pluralité d'électrodes 6 comprend au moins 2 électrodes, préférentiellement 4 électrodes.

De préférence, la pluralité d'électrodes 6 sont en aluminium et/ou en titane et/ou en platine et/ou en acier et/ou en graphite, plus préférentiellement en aluminium.

De préférence, selon l'un quelconque mode de réalisation du dispositif selon la présente invention, la membrane de filtration 7 du deuxième compartiment 3 a une porosité comprise entre 0,01 et 0,1 µm, préférentiellement entre 0,02 et 0,07 µm, plus préférentiellement autour de 0,04 µm.

De préférence, selon l'un quelconque mode de réalisation du dispositif selon la présente invention, le moyen de contrôle de la circulation d'eau comprend une unité de régulation, au moins un capteur de pression localisé dans le deuxième compartiment 3 et au moins un capteur de niveau (hauteur) d'eau localisé dans le premier compartiment 2, le capteur de pression et le capteur de niveau d'eau étant couplés de manière opérationnelle à au moins une vanne et à l'unité de régulation.

De préférence, dans le procédé pour traiter les eaux usées selon la présente invention, l'entrée des eaux usées est réalisée par un déversement gravitaire des eaux usées. De préférence, les eaux usées entrant dans le premier compartiment ont été préalablement prétraitées dans un décanteur de manière à éliminer des déchets et/ou au moins une partie de la matière en suspension.

De préférence, le procédé pour traiter les eaux usées selon la présente invention comprend également une étape de traitement biologique anaérobie préalable au traitement biologique aérobie.

De préférence, le procédé pour traiter les eaux usées selon la présente invention comprend en outre une étape de pré-traitement préalable à l'étape de de traitement biologique aérobie ou préalable à l'étape de traitement biologique anaérobie.

De préférence, le procédé comprend en outre un rétro-lavage, préalable et/ou subséquent à la filtration, au cours duquel de l'air est injecté à contre-courant de la membrane de filtration pendant une durée de rétro-lavage prédéterminée, le rétro-lavage étant agencé pour décolmater la membrane de filtration.

De préférence, le moyen de contrôle de la circulation des eaux mesure une pression au niveau de la membrane de filtration, détermine un écart entre la pression et une pression prédéterminée, et actionne le moyen de circulation des eaux pour augmenter ou diminuer le débit d'eau dans l'enceinte de réception de manière à réduire cet écart. De préférence, le moyen de circulation des eaux comprend une pompe agencée pour pomper et évacuer les eaux filtrées par la sortie d'eau propre. De préférence, le moyen de circulation des eaux comprend en outre un déversement gravitaire des eaux usées dans le premier compartiment.

De préférence, dans le procédé selon la présente invention, l'électrocoagulation des eaux usées dans le premier compartiment est concomitante au traitement biologique aérobie.

De préférence, le procédé selon la présente invention comprend une aération du premier compartiment et/ou du deuxième compartiment pendant une durée d'aération prédéterminée.

De préférence, dans le procédé selon la présente invention, les eaux usées sont des eaux grises et/ou des eaux noires provenant par exemple d'une habitation unifamiliale, d'un complexe hôtelier, d'une entreprise, et/ou d'un lotissement.

De préférence, dans le procédé selon la présente invention, les eaux dans le premier compartiment et/ou dans le deuxième compartiment présentent une concentration de matière en suspension, MES, comprise entre 10 g/L et 25 g/L, préférentiellement entre 11 g/L et 20 g/L, plus préférentiellement entre 12 g/L et 15 g/L.

De préférence, dans le procédé pour traiter des eaux usées en mettant en oeuvre le dispositif selon la présente invention, l'entrée des eaux usées dans le premier compartiment se réalise par un déversement gravitaire des eaux usées. Alternativement, l'entrée des eaux usées dans le premier compartiment se réalise par un premier actionnement du moyen de circulation des eaux déclenchant l'entrée des eaux usées, le moyen de circulation des eaux étant contrôlé par le moyen de contrôle et le premier actionnement étant réalisé lorsqu'un capteur de niveau d'eau détecte une hauteur d'eau H1 dans le premier compartiment comprise entre une hauteur d'eau à traiter égale ou supérieure à un seuil minimal Hmin d'eau à traiter et/ou égale ou inférieure à un seuil maximal Hmax d'eau à traiter.

### Exemples.-

### Exemple 1.- Propriétés physico-chimiques et biologiques des eaux propres obtenues par la mise en oeuvre du dispositif selon la présente invention ou par la mise en oeuvre du procédé selon la présente invention

Les eaux propres obtenues par la mise en oeuvre du dispositif ou du procédé selon la présente invention ont :
- un pH compris entre 6,5 et 8,5 ;
- une demande biochimique en oxygène (DBC5) inférieure à 10 mgO₂/L, préférentiellement inférieure à 5 mgO₂/L, correspondant à un pourcentage moyen d'abattement par rapport à la demande biochimique en oxygène des eaux usées en entrée du dispositif, respectivement, de 95% et 98%,
- une demande chimique en oxygène (DCO) inférieure à 100 mgO₂/L, préférentiellement inférieure à 50 mgO₂/L, et plus préférentiellement inférieure à 25 mgO₂/L correspondant à un pourcentage moyen d'abattement par rapport à la demande chimique en oxygène des eaux usées en entrée du dispositif, respectivement, de 75%, 88% et 95%,

- une concentration d'azote total inférieure à 30 mg/L, et préférentiellement inférieure à 15 mg/L, et plus préférentiellement inférieure à 10 mg/L, correspondant à un pourcentage moyen d'abattement de l'azote total par rapport à la concentration d'azote total des eaux usées en entrée du dispositif, respectivement, de 65%, 83% et 90%,
- une concentration de phosphore total inférieure à 10 mg/L, préférentiellement inférieure à 2 mg/L, et plus préférentiellement à 0.5 mg/L correspondant à un pourcentage moyen d'abattement de phosphore total par rapport à la concentration de phosphore total des eaux usées en entrée du dispositif, respectivement, de 35%, 85% et 97%,
- une concentration de matière en suspension (MES) inférieure à 10 mg/L, préférentiellement inférieure à 5 mg/L, et plus préférentiellement égale à 0 mg/L correspondant à un pourcentage moyen d'abattement de MES par rapport à la concentration de MES des eaux usées en entrée du dispositif, respectivement, de 90%, 97% et 100%,
- une concentration de bactéries Escherichia coli (E. coli) inférieure à 1 UFC/100 ml correspondant à un pourcentage d'abattement de la concentration de E. coli par rapport à la concentration de E. coli des eaux usées en entrée du dispositif de 100%.

A de nombreux égards, la qualité des eaux propres obtenues par la mise en oeuvre du dispositif ou du procédé selon la présente invention est à minima la qualité de l'eau de pluie.

### Exemple 2.- Rendement d'eau propre obtenu en mettant en oeuvre le dispositif selon la présente invention

La quantité d'eau propre obtenue à la sortie d'eau propre 11 est égale ou supérieure à 95% de la quantité d'eaux usées entrant à l'entrée d'eaux usées 5 du premier compartiment 2 ou du troisième compartiment 23 ou à l'entrée d'eaux usées 14 de l'unité de pré-traitement 13.

La mise en oeuvre du dispositif selon la présente invention présente donc très peu de pertes d'eau, ce qui assure un recyclage optimal de l'eau. Ceci est donc particulièrement adéquat pour des habitations ou des lotissements ayant un accès difficile à l'eau.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif pour traiter des eaux usées (1) comprenant une entrée d'eaux usées (5), et une sortie d'eau propre (11) entre lesquelles se trouve une enceinte de réception (9) des eaux usées comprenant un premier (2) et un deuxième compartiment (3), situé de part et d'autre d'une paroi de communication (8), agencée pour former un circuit fluidique de circulation des eaux comprenant :
- ledit premier compartiment (2), lequel est agencé pour être relié à une unité de pré-traitement via une communication fluidique passant par ladite entrée d'eaux usées (5) et étant agencé pour réaliser un traitement biologique aérobie des eaux usées et muni d'un moyen de mesure de niveau agencé pour envoyer un signal de niveau d'eau à un moyen de contrôle de la circulation des eaux et d'une pluralité d'électrodes (6),
- ledit deuxième compartiment (3), lequel est agencé pour recevoir les eaux dudit premier compartiment (2) et comprenant une membrane de filtration (7) séparant ledit deuxième compartiment (3) en une première zone et en une deuxième zone, ladite deuxième zone étant séparée de ladite première zone par ladite membrane de filtration (7) et reliée à ladite sortie d'eau propre (11), ladite première zone étant connectée de manière fluidique à une sortie (22) apte à évacuer des boues,
ladite enceinte (9) comprenant en outre
- un moyen d'aération (4) en connexion fluidique avec ledit premier (2) et ledit deuxième compartiment (3), commandé par un moyen de contrôle de l'aération,
- un moyen de circulation des eaux en connexion opérationnelle avec ledit premier (2) et ledit deuxième compartiment (3), commandé par un moyen de contrôle de la circulation d'eau, ledit moyen de contrôle de la circulation des eaux, étant en connexion opérationnelle avec ledit moyen de mesure de niveau, et comprend une pompe (12) agencée pour pomper et évacuer les eaux filtrées par ladite sortie d'eau propre (11), un moyen de contrôle de ladite pluralité d'électrodes (6),
**caractérisé en ce que**
le dispositif (1) présente
- au moins un mode opérationnel dans lequel (a) le premier compartiment (2) présente une hauteur d'eau H1 variable maintenue égale ou supérieure à un seuil minimum Hmin par ledit moyen de contrôle de la circulation d'eau, dans laquelle ladite pluralité d'électrodes (6) est immergée, et (b) le deuxième compartiment (3) présente une hauteur d'eau H2 substantiellement constante, dans laquelle la membrane de filtration (7) est immergée, ladite hauteur d'eau H2 étant maintenue par ledit moyen de contrôle de la circulation d'eau, ledit mode opérationnel étant déclenché par ledit moyen de contrôle de la circulation des eaux, lequel actionne ladite pompe (12) lorsque ledit signal de niveau d'eau, mesurée par ledit moyen de mesure de niveau, est supérieure audit seuil minimum Hmin, et
- au moins un mode d'arrêt.

2. Dispositif selon la revendication 1, dans lequel ledit moyen de circulation des eaux comprend en outre un canal de sortie (10) des eaux usées en connexion fluidique, de préférence en connexion fluidique directe, avec ladite première zone dudit deuxième compartiment (3), ledit premier compartiment (2) et, un troisième compartiment (23) si il est présent, ledit canal de sortie (10) des eaux usées étant agencé pour évacuer un trop plein d'eaux usées et/ou pour évacuer un trop plein de boues des eaux usées.

3. Dispositif selon la revendication 1 ou la revendication 2, dans lequel ladite enceinte de réception (9) comprend en outre un troisième compartiment (23) agencé pour réaliser un traitement biologique anaérobie, ledit troisième compartiment (23) étant en connexion fluidique avec le premier compartiment (2), avec l'entrée d'eaux usées, et avec ledit canal de sortie (10) des eaux usées et étant préférentiellement localisé dans l'enceinte (9) en amont par rapport au premier compartiment (2) dans le circuit fluidique de circulation des eaux.

4. Dispositif selon l'une quelconque des revendications précédentes, comprenant en outre une unité de pré-traitement (13) comme par exemple un décanteur et/ou une unité de préfiltration en amont dudit premier compartiment (2) ou dudit troisième compartiment (23), ladite unité de pré-traitement (13) étant agencée pour éliminer des gros déchets et/ou des grosses matières en suspension des eaux usées.

5. Dispositif selon l'une quelconque des revendications précédentes, comprenant en outre une unité de stockage d'eau propre (17) en aval dudit deuxième compartiment (3), ladite unité de stockage d'eau propre (17) ayant une entrée d'eau propre (18) en connexion fluidique avec ladite sortie d'eau propre (11) dudit deuxième compartiment (3).

6. Dispositif selon l'une quelconque des revendications précédentes, dans lequel l'enceinte (9) de réception des eaux usées est une enceinte monobloc.

7. Dispositif selon l'une quelconque des revendications précédentes, dans lequel ladite pluralité d'électrodes (6) comprend au moins 2 électrodes, préférentiellement 4 électrodes, et ladite pluralité d'électrodes (6) sont en aluminium et/ou en titane et/ou en platine et/ou en acier et/ou en graphite, préférentiellement en aluminium.

8. Dispositif selon l'une quelconque des revendications précédentes, dans lequel ladite membrane de filtration (7) du deuxième compartiment (3) a une porosité comprise entre 0,01 et 0,1 µm, préférentiellement entre 0,02 et 0,07 µm, plus préférentiellement autour de 0,04 µm.

9. Dispositif selon l'une quelconque des revendications précédentes, dans lequel un système de régulation rassemble le moyen de contrôle de l'aération, le moyen de contrôle de la circulation d'eau, et le moyen de contrôle de la pluralité d'électrodes.

10. Procédé pour traiter des eaux usées en mettant en oeuvre le dispositif pour traiter des eaux usées selon l'une quelconque des revendications précédentes comprenant :
- une entrée des eaux usées dans un premier compartiment (2),
- un traitement biologique aérobie des eaux usées dans ledit premier compartiment (2),
- une électrocoagulation des eaux usées dans ledit premier compartiment (2),
- un transfert des eaux en traitement dudit premier compartiment (2) au deuxième compartiment (3),
- une filtration membranaire des eaux en traitement dans le deuxième compartiment (3) par passage des eaux à filtrer au travers d'une membrane de filtration (7), laquelle sépare le deuxième compartiment (3) en une première zone externe à la membrane et une deuxième zone définie par ladite membrane (7), formant des eaux filtrées,
- une sortie des eaux filtrées de ladite deuxième zone,
**caractérisé en ce que**
le premier compartiment (2) présente une hauteur d'eau H1 variable maintenue égale ou supérieure à un seuil minimum Hmin par un moyen de contrôle de la circulation d'eau, et le deuxième compartiment (3) présente une hauteur d'eau H2 substantiellement constante, dans laquelle la membrane de filtration (7) est immergée, ladite hauteur d'eau H2 étant maintenue par ledit moyen de contrôle de la circulation d'eau.

11. Procédé selon la revendication 10, dans lequel ladite entrée des eaux usées (5) dans ledit premier compartiment (2) est réalisée par un déversement gravitaire des eaux usées.

12. Procédé selon la revendication 10 ou la revendication 11, comprenant en outre un rétro-lavage, préalable et/ou subséquent à ladite filtration, au cours duquel de l'air est injecté à contre-courant de ladite membrane de filtration (7) pendant une durée de rétro-lavage prédéterminée, ledit rétro-lavage étant agencé pour décolmater ladite membrane de filtration (7).

13. Procédé selon l'une quelconque des revendications 10 à 12, dans lequel lesdites eaux usées sont des eaux grises et/ou des eaux noires provenant par exemple d'une habitation unifamiliale, d'un complexe hôtelier, d'une entreprise, et/ou d'un lotissement.

14. Procédé selon l'une quelconque des revendications 10 à 13, dans lequel les eaux dans le premier et/ou deuxième compartiment présentent une concentration de matière en suspension, MES, comprise entre 10 g/L et 25 g/L, préférentiellement entre 11 g/L et 20 g/L, plus préférentiellement entre 12 g/L et 15 g/L.
